# EUROPEAN PATENT APPLICATION

(11) **EP 4 261 932 A1**
(43) Date of publication of application: **18.10.2023**
(21) Application number: 22168582.9
(22) Date of filing: 14.04.2022
(51) Int. Cl.: H01M 4/133, H01M 4/36, H01M 4/40, H01M 4/04, H01M 4/134, H01M 4/1395, H01M 4/38, H01M 4/62

(54) **SILICON-CARBON COMPOSITE MATERIAL AND ANODE COMPRISING THE SAME**

(71) Applicant: Cellforce Group GmbH, 72072 Tübingen (DE)
(72) Inventor: Sommer, Dr., Heino, 76344 Eggenstein-Leopoldshafen (DE)
(74) Representative: Michalski Hüttermann & Partner Patentanwälte mbB

(57) **Abstract**

The present invention relates to a silicon-carbon composite material (10), comprising:
- a porous carbon scaffold comprising micropores and mesopores and a total pore volume of more than 0.5 cm³/g;
- a silicon content in the range of ≥ 30 wt.-% to ≤ 75 wt.-%, relating to the silicon-carbon composite material (10);
- nanoparticles comprising at least one of the elements Cu, Fe or Ni, wherein the nanoparticles are positioned on the surface of the silicon-comprising carbon scaffold, and
- nanowires, selected from silicon nanowires and carbon nanowires; wherein the nanowires are grown on the nanoparticles, and wherein a first surface coating is provided which is at least partially applied on a first surface area of silicon-carbon composite material (10), the surface coating comprising at least one of the elements selected from C, Al, Si, Ti, Zr and Nb. The present invention further relates to an anode (110) comprising such a silicon-carbon composite material (10).

## Description

The present invention relates to a silicon-carbon composite material which shows improved properties especially when used in an anode for an electrochemical energy storage device. The present invention further relates to an anode for an electrochemical energy storage device and to an electrochemical energy storage device comprising such an anode.

Electrochemical energy storage devices are widely known in the art. Particularly in view of the advancing electrification of vehicles, electrochemical energy storage devices are becoming increasingly important. With this regard, especially the charging properties become more important to gain better acceptance in the market.

Further, silicon-carbon mixtures are known which can be produced from carbon materials comprising a pore volume comprising micropores, mesopores, and/or macropores. Such carbon mixtures can serve as a scaffold for creation of silicon-carbon composite materials. The impregnation of the pore volume of porous carbon materials with silicon may be realized with silicon being provided in nano size. In general, silicon comprises a significantly higher energy density than, e.g., graphite. For example, the energy density of silicon exceeds the energy density of graphite by a factor of ten.

Further to impregnation, such impregnated carbon materials may be coated such that a still existing porous surface is further reduced. Possible coatings may consist, e.g., a polymer, in particular a conductive polymer, a carbon or a metal oxide.

Moreover, carbon materials impregnated with silicon may be used in a combination with other materials as a material composition. Known material compositions include binders and/or carbon particles. Such material compositions are typically utilized in electrochemical cells, in particular in lithium-ion battery cells as electrode material, in particular anode material.

For example, US Publication No. 2017 / 0170477 discloses a composite comprising a porous carbon scaffold and silicon, wherein the composite comprises 15 to 85 wt% silicon and a nitrogen inaccessible volume in the range of 0.05 cm³/g to 0.5 cm³/g, and wherein the composite comprises a plurality of particles having a particle scaffold density in the range of 1.5 g/cm³ to 2.2 g/cm³ as measured by helium pycnometry.

Due to the rapidly increasing importance of electrochemical energy storage devices, in particular Li-ion batteries, there is a continuous need for further development and improvement in the field of formation of such devices.

Based on the above it is an object of the present invention to overcome at least one disadvantage of the prior art, at least partially. It is particularly an object of the present invention to provide measure providing improved charging properties in an electrochemical energy storage device. It is further an object of the present invention to provide a measure in an electrochemical energy storage device which shows good cycling stability and long lifetime.

These objects are at least in part solved by a silicon-carbon composite material according to claim 1. This

Method for manufacturing a surface-coated silicon-carbon composite material according to claim 1, according to an anode according to claim 14, a method for manufacturing an anode according to claim 15, an electrochemical storage device according to claim 19 and an electrically driven vehicle according to claim 20. Preferred embodiments of the invention are described in the dependent claims and the following description, each of which may individually or in combination represent an aspect of the invention unless explicitly excluded. Where a feature is shown in combination with another feature, this is for simplified illustration of the invention only and is in no way intended to imply that this feature cannot be a further feature of the invention without the other feature.

Described is a silicon-carbon composite material, comprising:
- a porous carbon scaffold comprising micropores and mesopores and a total pore volume of more than 0.5 cm³/g;
- a silicon content in the range of ≥ 30 wt.-% to ≤ 75 wt.-%, relating to the silicon-carbon composite material;
- nanoparticles comprising at least one of the elements Cu, Fe or Ni, wherein the nanoparticles are positioned on the surface of the silicon-comprising carbon scaffold, and
- nanowires, selected from silicon nanowires and carbon nanowires; wherein the nanowires are grown on the nanoparticles, and wherein a first surface coating is provided which is at least partially applied on a first surface area of silicon-carbon composite material, the surface coating comprising at least one of the elements selected from C, Al, Si, Ti, Zr and Nb.

Such a silicon-carbon composite material is not known from the prior art but shows significant advantages over prior art solutions, especially when used in an anode of an electrochemical energy storage device.

The described composite material is a silicon-carbon composite material and thus comprises at least the elements silicon and carbon, wherein the silicon is provided in the pores of the carbon scaffold.

The term carbon refers to a material or substance consisting of carbon or at least comprising carbon. In this regard, a carbon material may comprise high purity, amorphous and crystalline materials. A carbon may be an activated carbon, a pyrolyzed dried polymer gel, a pyrolyzed polymer cryogel, a pyrolyzed polymer xerogel, a pyrolyzed polymer aerogel, an activated dried polymer gel, an activated polymer cryogel, an activated polymer xerogel, an activated polymer aerogel, or a combination thereof. In a further embodiment, a carbon is producible by a pyrolysis of coconut shells or other organic waste. In this regard, a polymer is a molecule comprising two or more repeating structural units. A porous carbon offers the advantage that it is usually easy to produce, usually has low impurities and a large pore volume. As a result, a porous carbon exhibits good electrical conductivity and high mechanical and chemical stability. In one embodiment, the carbon material has a high micropore volume ratio like described in more detail below.

In one further embodiment, the carbon is a hard carbon material, a graphitic carbon, or an oxide containing compound. For example, the oxide containing compound is a silicon oxide (SiO₂). Alternatively, an oxide containing compound is a titanium oxide (TiO₂), a tin oxide (SnO₂), or other oxides. A hard carbon material is a non-graphitizable carbon material. A hard carbon offers the advantage that it remains amorphous at elevated temperatures (typically > 1500 °C), whereas a "soft" carbon crystallizes and becomes graphite.

In one embodiment, the carbon may be a modified hard carbon. A modified hard carbon is a composite material comprising both a carbon, in particular a hard carbon, and a lithium alloy material. A lithium alloy material may be silicon, tin, germanium, nickel, aluminum, manganese, alumina (Al₂O₃), titanium, titanium oxide, sulphur, molybdenum, arsenic, gallium, phosphorus, selenium, antimony, bismuth, tellurium or indium or any other metal or metalloid capable of absorbing lithium.

The silicon portion may be a pure silicon or a material composition comprising silicon. For example, the silicon portion may be at least one alloy. An alloy may be a silicon-titanium alloy (Si-Ti), a silicon iron alloy (Si-Fe), a silicon nickel alloy (Si-Ni). In a further embodiment, the silicon portion may consist of P-dopants, As-dopants or N-dopants. A P-dopant is usually a phosphorus dopant, an As-dopant is usually an arsenic dopant and an N-dopant is usually a nitrogen dopant.

The presence of silicon in the silicon carbon composite material and in particular in the pores thereof may be advantageous as in general, silicon comprises a significantly higher energy density than, e.g., graphite. For example, the energy density of silicon exceeds the energy density of graphite by a factor of ten.

The silicon-carbon composite material comprises a porous carbon scaffold comprising micropores and mesopores and a total pore volume of more than 0.5 cm³/g. Typically, the porous carbon has a pore space, also referred to as a pore volume, wherein the pore space is a group of voids (pores) in the carbon that is fillable with a gas or fluid. This embodiment on the one hand significantly may reduce weight of the anode and thus of the electrochemical energy storage device.

This embodiment may be of outermost importance especially in case silicon-carbon composite material is used in an anode and the respectively equipped electrochemical energy storage device is used in mobile applications, such as in vehicles. Apart from that, the electrochemical properties may also be improved. With this regard, A porous arrangement offers the advantage that it is usually easy to produce, usually has low impurities and a large pore volume. As a result, a porous carbon exhibits good electrical conductivity and high mechanical and chemical stability.

The porous carbon scaffold thus comprises micropores and mesopores. Micropores in the sense of the present invention are defined as pores with diameter less than 2 nm, whereas mesopores in the sense of the present invention are defined as pores with diameter of 2 nm to 50 nm.

Further, the silicon-carbon composite material has a silicon content in the amount of ≥ 30wt.-% to ≤ 75wt.-%, relating to the silicon-carbon composite material. The silicon content of the total mass of the silicon-carbon composite material is usually between 30% and 75%, especially between 40% and 60%. This embodiment may improve charging processes in particular with regard to charging times or other charging properties in a very efficient manner.

The silicon-carbon composite material further comprises nanoparticles. The comprised nanoparticles are characterized in that they comprise at least one of the elements Cu, Fe and Ni. In the sense of the present invention, comprising the elements Cu, Fe and Ni shall mean that the nanoparticles include the elements in metallic pure form or as atomic constituents in a chemical compound or alloy or as metal oxide. It may be especially preferred that the nanoparticles comprise CuO or Fe₂O₃. Further and with regard to the size, nanoparticles in the sense of the present invention are defined in that they have maximum diameter in the nanometer range, i.e. in the range of ≤ 10 nm, such as ≤ 7 nm. In particular, the nanowires may have a length in the range of ≥ 3 nm to ≤ 10 nm.

Regarding the specific arrangement, the silicon-carbon composite material is arranged such, that the nanowires are positioned on the surface of the porous and silicon-comprising carbon scaffold and may serve as seed particles to form nanowires as described below.

The silicon-carbon composite material thus further comprises nanowires, selected from silicon nanowires and carbon nanowires. Thus, the silicon-carbon composite material may comprise silicon nanowires, carbon nanowires or a mixture of silicon nanowires and carbon nanowires.

As a general definition and like generally known in the art, a nanowire is a nanostructure in the form of a wire with the diameter in the order of nanometers. More precisely, nanowires can be defined as structures that have a thickness or diameter constrained to tens of nanometers or less, in particular of ≤ 100 nm, such as ≤ 50 nm and an unconstrained length.

As generally known in the art, silicon nanowires, also referred to as SiNWs, are a type of semiconductor nanowire most often formed from a silicon precursor by etching of a solid or through catalyzed growth from a vapor or liquid phase. According to the present invention, the nanowires are grown on the nanoparticles, which thus may serve as seed particles.

It is preferred that silicon nanowires are provided, which comprise a monocrystalline silicon, a polycrystalline silicon, or a combination thereof. In other words, it may be preferred if the silicon nanowires comprise only a monocrystalline form, only a polycrystalline form or a mixture of the latter.

Carbon nanowires may be formed correspondingly to silicon nanowires, e.g. from a carbon precursor by etching of a solid or through catalyzed growth from a vapor or liquid phase or in particular by catalyzed growth from a chemical vapor deposition. Again, the nanoparticles may serve as seed particles.

Further, a first surface coating is provided which is at least partially applied on a first surface area of the silicon-carbon composite material comprising at least one of the elements selected from C, Al, Si, Ti, Zr and Nb. This surface coating and the respective area is called first surface coating and first surface area, as optionally, there might be a second surface coating and a second surface area, which is described in more detail down below.

The first surface coating thus covers at least a part of the silicon-carbon composite material and more specifically at least in part covers the silicon-comprising carbon scaffold together with the nanoparticles and the nanowires. The first surface coating comprises at least one of the elements selected from C, Al, Si, Ti, Zr and Nb and thus comprises only one of these elements or a mixture of two or more of the afore-named elements. In the sense of the present invention, comprising the elements Al, Si, Ti, Zr and Nb shall mean that the first surface coating includes the elements in metallic pure form or as atomic constituents in a chemical compound or alloy. Especially preferred, the first surface coating comprises an oxide of the afore-named elements, wherein aluminum oxide (Al₂O₃) is especially preferred.

It is especially preferred with regard to electronic properties of a respectively equipped anode that the at least partially applied first surface coating is formed as a layer, wherein the layer of the surface coating has a thickness of > 0 nm to ≤ 0.3 nm and comprises an amorphous carbon or a metal oxide from at least one or more of the elements Al, Si, Ti, Zr and Nb or a combination of the aforementioned elements.

It is further preferred that the first surface coating is covering at least 50% of the surface area of the silicon-carbon composite material and thus of the silicon-comprising carbon scaffold and the nanowires as well as the nanoparticles. For example, the first surface coating is covering at least 70% of the surface area of the silicon-carbon composite material, preferably is covering at least 95% of the surface area of the silicon-carbon composite material. As an example, the first surface coating is covering 100% of the surface area of the silicon-carbon composite material.

The benefit of carbon materials which are impregnated and/or coated is the improvement of the stability of the lithium-ion storage capacity, which increases the charging capacity of lithium-ion battery cells.

Such a silicon carbon composite material reaches the advantages according to which outstanding electronic properties are reached. Such properties may especially allow an improved charging behavior of an anode which is equipped with the described silicon-carbon composite material.

It may further be preferred that additionally to the first surface coating which at least in part covers a first surface area of the silicon-carbon composite material, a second silicon-carbon composite coating is provided. Such second surface coating at least partially covers the surface area of the silicon-carbon composite material. Therefore, the surface area of the silicon-carbon composite material is at least partially covered by the first surface coating and further by said second surface coating. The second surface coating may cover a second surface area of the silicon-carbon composite material and thus of the silicon-comprising carbon scaffold, the nanoparticles and the nanowires. The second surface area may be different from the first surface area, it may in part overlap the first surface area or it may be the same as the first surface area. Consequently, the second surface coating is at least partially applied on top of the first surface coating and/or besides and thus next to the first surface coating.

With regard to the second surface coating, it may be preferred the second surface coating is formed as a carbon coating. With this regard, the carbon coating may be a pure carbon coating or it may be a coating which comprises carbon as an element in the coating substance.

The second surface coating allows the electrical properties of the material and thus of an anode equipped therewith to be realized especially effectively.

With regard to further advantages and technical features of the silicon-carbon composite material, it is referred to the anode, the methods, and to the electrochemical energy storage device as well as to the vehicle.

Further described is a method of manufacturing a surface-coated silicon-carbon composite material like described above, wherein the method comprises the steps of
- providing a porous carbon scaffold with micropores and mesopores;
- introducing a compound comprising silicon and further optionally at least one of the elements Fe, Al, Ni, W and Ti into the micropores and mesopores of the porous carbon scaffold in particular by chemical vapor infiltration to form a silicon-carbon composite material,
- attaching nanowires selected from carbon nanowires and silicon nanowires to the porous carbon scaffold in particular by means of chemical vapor deposition, wherein the nanowires are grown on nanoparticles being positioned on the surface of the carbon scaffold, wherein the nanoparticles comprise at least one element selected from Cu, Fe and/or Ni;
- applying at least a first surface coating on a surface area of the silicon-carbon composite material, the first surface coating comprising at least one of the elements selected from C, Al, Si, Ti, Zr and Nb, and wherein the first surface coating covers the surface area of the silicon-carbon composite material at least partially.

Such a method is suited for manufacturing a silicon-carbon composite material like described before.

The method comprises at least the following steps.

A porous carbon scaffold is provided with micropores and mesopores. With regard to the definitions of micropores and mesopores and the further embodiments of the carbon scaffold, it is referred to the above description of the silicon-carbon composite material.

Having provided the porous carbon scaffold, a compound comprising silicon and further optionally at least one of the elements Fe, Al, Ni, W and Ti into the micropores and mesopores of the porous carbon scaffold. With regard to the respective compound which is introduced into the pores, it is referred to the above description of the silicon-carbon composite material.

It is preferred that introducing the compound into the micropores and mesopores of the porous carbon scaffold is performed by means of chemical vapor infiltration, also known as CVI. Such a procedure is known per se and provides significant advantages in the present application. For example, the infiltration may be realized in a very defined manner also in very small pores, i.e. in the micropores or mesopores. Thus, the infiltrated product and thus the silicon-carbon composite material also has defined properties, which in turn allows producing electrodes in a very reproducible manner.

The method as described further comprises the step according to which nanowires selected from carbon nanowires and silicon nanowires are attached to the porous carbon scaffold. This may be realized e.g. by chemical vapor deposition as outlined above.

In particular, the nanowires are grown on nanoparticles being positioned on the surface of the carbon scaffold, wherein the nanoparticles comprise at least one element selected from Cu, Fe and/or Ni. In the sense of the present invention, comprising the elements Cu, Fe and Ni shall mean that the nanoparticles include the elements in metallic pure form or as atomic constituents in a chemical compound like alloys or oxides. Consequently, before growing the nanowires, nanoparticles acting as seed particles are positioned on the surface of the silicon-comprising carbon scaffold.

With regard to the nanoparticles. It is referred to the above description. The comprised nanoparticles are characterized in that they comprise at least one of the elements Cu, Fe and Ni. In the sense of the present invention, comprising the elements Cu, Fe and Ni shall mean that the nanoparticles include the elements in metallic pure form or as atomic constituents in a chemical compound like alloys or oxides. Especially preferred, the nanoparticles comprise CuO or Fe203.

Preferably, the nanowires, i.e. the silicon nanowires and/or the carbon nanowires are attached through the nanoparticles like CuO or Fe₂O₃ to the porous carbon scaffold. The silicon and carbon nanowires can be synthesized by using chemical vapor deposition methods (e.g. by using SiH₄ or C₂H₂) and the catalytic behavior of the copper oxide to grow such Si and C nanowires on the nanoparticles. This method allows very reproducible results so that the resulting structure in turn shows very reproducible properties.

Having attached the nanowires to the carbon scaffold, the further step is provided which comprises applying at least a first surface coating on a surface area of the silicon-carbon composite material forming a surface-coated silicon-carbon composite material, which coating covers the surface area of the silicon-carbon composite material at least partially.

With regard to the applied surface coating, the latter comprises at least one of the elements selected from C, Al, Si, Ti, Zr and Nb. Generally, it is preferred that the first surface coating comprises a metal oxide from at least one of the elements Al, Si, Zr and Nb. It is especially preferred that the first surface coating comprises aluminum oxides or zirconium oxides or carbon.

It may cover at least 50 % of the surface of the silicon-carbon composite material. In an exemplary embodiment, the first surface coating may cover all of the surface area of the silicon-carbon composite material.

Preferably, the at least one surface coating of the surface area of the silicon-carbon composite material with the silicon and/or carbon nanowires is applied via a gas phase deposition method.

It is further preferred that the silicon-carbon composite material is treated with a metal alkoxide or metal amide or alkyl metal compound to form a processed compound surface. Afterwards, the so-produced compound surface is treated with at least one of moisture or oxygen or ozone in order to form the at least one layer of a first surface coating. This embodiment shows a reliable manner to provide the surface coating with defined and predictable properties.

With regard to the before-described processing, it is especially preferred that treatment of the silicon-carbon composite material with a metal alkoxide or metal amide or alkyl metal compound to form a processed compound surface and the subsequent treatment of the processed compound surface with moisture or oxygen or ozone are repeated at least once. This embodiment allows an especially secure and reliable treatment of the processed compound surface which in turn reaches well defined surface properties.

Regarding the treatment of the processed compound with moisture or oxygen or ozone, a temperature in a range from 150 °C to 550 °C is preferably applied.

In a specific embodiment and for explanation purposes, the silicon-comprising carbon scaffold together with the nanoparticles, such as CuO, and the nanowires form a material, which is reacted with another reaction medium e.g. Trimethylaluminum (TMA) as an example for an alkyl metal compound. This may be realized in the sense of a so-called atomic layer deposition (ALD) process. Thus, TMA covers the accessible surface and decomposes to Al₂O₃ in the presence of H₂O and temperatures of particularly >250 °C.

With regard to further advantages and technical features of the before-described method, it is referred to the silicon-carbon composite material, the anode, the further methods, and to the electrochemical energy storage device as well as to the vehicle.

Further described is an anode for an electrochemical energy storage device, comprising a silicon-carbon composite material like described above. The silicon-carbon composite material may be formed with any optional features as described above.

Thus, the anode comprises a silicon-carbon composite material, comprising:
- a porous carbon scaffold comprising micropores and mesopores and a total pore volume of more than 0.5 cm³/g;
- a silicon content in the range of ≥ 30 wt.-% to ≤ 75 wt.-%, relating to the silicon-carbon composite material;
- nanoparticles comprising at least one of the elements Cu, Fe or Ni, wherein the nanoparticles are positioned on the surface of the silicon-comprising carbon scaffold, and
- nanowires, selected from silicon nanowires and carbon nanowires; wherein the nanowires are grown on the nanoparticles, and wherein a first surface coating is provided which is at least partially applied on a first surface area of silicon-carbon composite material, the surface coating comprising at least one of the elements selected from C, Al, Si, Ti, Zr and Nb.

Generally, the anode may comprise the silicon-carbon composite material in the amount of ≥ 45 wt.-% to ≤ 90 wt.-%, relating to the anode. Generally, in this sense, the anode may comprise all materials, preferably present in a binder which are attached to an electrical conductor, such as a metal foil. In other words, the provided amount relates to the anode and thus the material present on the conductor.

Additionally to this silicon-carbon composite material, the anode may comprise a further silicon-carbon composite material being different from the first and above-described silicon-carbon composite material.

The anode further may comprise graphite. Graphite is generally known as an anode material for lithium batteries, or lithium ion batteries, respectively. In general, graphite is a superior anode material and is known for a long time for lithium ion batteries, benefiting from its incomparable balance of relatively low cost, abundance, high energy density, power density, and very long cycle life. However, in prior art electrochemical energy storage devices, graphite is mostly present as the predominant material in terms of amount in the composition. In contrast to such an arrangement and according to the present invention, graphite is present in the anode in a comparably small amount, i.e. in an amount of ≥ 5 wt.-% to ≤ 47 wt.-%, relating to the anode.

It was surprisingly found that exchanging a huge amount of graphite by the carbon silicon composite material allows even improved characteristics compared to pure graphite or a huge amount of graphite.

Further, a binder is present in the anode as described. A binder in a manner known per se is a binding agent or binding material. A binder thus refers to a material that can hold together individual components, in particular particles, of a substance, for example a carbon and the silicon-carbon composite material. A binder is typically arranged such that when particles are brought together with a corresponding binder, a cohesive mass is formed which can be further shaped into a new form.

The binder may be configured to bind all compounds as present in the anode, such as in particular, the particularly porous carbon and the silicon content of the first silicon-carbon composite, the graphite and the nanowires. In a further embodiment, the binder is adapted to bind further materials to at least one of the respective silicon-carbon composites. Thus, a binder is generally arranged to hold together the components of the silicon-carbon composite mixture and optionally further carbon materials of the electrode which may be formed as an anode.

The anode may comprise at least one further binder. This results in the advantage that carbon increases the conductivity of the electrode and thus provides improved conductivity. The at least one further binder further supports the mechanical stability.

The anode may comprise at least two binders, wherein a first binder is arranged to bind the particularly porous carbon and the silicon-carbon portion of the first silicon-carbon composite and the particularly porous carbon and the silicon portion of the at least one further silicon-carbon composite, and wherein the at least one further binder is arranged to bond the first silicon-carbon composite to the at least one further silicon-carbon composite.

Optionally, the silicon-carbon composite material comprises at least one further binder adapted to bond the first material component and the at least one further material component together.

For example, the binder is a styrene-butadiene rubber/carboxymethylcellulose (SBR/CMC) mixture, a polyacrylic acid (PAA) and/or a lithium polyacrylic (LiPAA) or a sodium polyacrylic (NaPAA). In an alternative embodiment, the binder is formed as a fluoropolymer such as a polytetrafluoroethylene (PTFE), a perfluoroalkoxy polymer resin (PFA), a fluorinated ethylene propylene (FEP), a polyethylene tetrafluoroethylene (ETFE), a polyvinyl fluoride (PVF), a polyethylene chlorotrifluoroethylene (ECTFE), a (polyvinylidene fluoride (PCDF), a (polychlorotrifluoroethylene (PCTFE), a trifluoroethanol, or combinations of at least one of these materials with at least one other material. In a further embodiment, a binder is a polyimide or a copolymer of polyacrylic acid and styrene-butadiene. However, it is especially preferred that the binder is a styrene-butadiene gum/carboxymethylcellulose (CMC/SBR) mixture, a polyacrylic acid (PAA) and/or a lithium polyacrylic (LiPAA) or a sodium polyacrylic (NaPAA).

Generally, the binder may be used in an organic solution or in a water-based solution or as a solid binder.

The predescribed materials, such as in particular the silicon-carbon composite material, graphite, nanowires connected to nanoparticles including the respective coating, all present in a binder, may be provided on a metal conductor, such as a metal foil, in order to form the final anode.

An anode as described shows the advantage of outstanding charging times which allow charging the electrochemical energy storage device from a very low state of charge to a very high state of charge in a very short time. This improves the acceptance in the market significantly. Especially, thinking about secondary batteries as used in vehicles, the charging time is a significant factor which may improve acceptance of electrically driven vehicles. Therefore, especially improving charging times is an important characteristic of secondary batteries for vehicles, such as cars. However, of course it should be noted that the anode as described here and consequently the electrochemical energy storage device is not limited to use in vehicles.

Apart from the above and additionally to charging times, further characteristics of the anode are not deteriorated, such as long lifetime, high cycling stability and resistance against damages.

The silicon-carbon composite mixture may be composed such that the silicon-carbon composite mixture has an electrode density ranging from 0.09 g/cm³ to 1.5 g/cm³, or from 1.1 g/cm³ and 1.3 g/cm³. This offers the advantage that the particles comprise better contact with each other and thus the conductivity of the resulting electrode is improved.

Especially, the silicon-carbon composite mixture has a high electrical conductivity. This offers the advantage that the resistance of the electrode is reduced, thus allowing a faster reaction of the Li-ions with the silicon-carbon composite mixture. Hence, a charging speed of the lithium-ion cell may be increased.

With regard to further advantages and technical features of the before-described anode, it is referred to the silicon-carbon composite material, the methods, and to the electrochemical energy storage device as well as to the vehicle.

Further described is a method of manufacturing an anode like described before, wherein the method comprises the steps of:
- mixing a silicon-carbon composite material like described above with at least one carbon,
- combining the mixture of the silicon-carbon composite material and the at least one carbon with at least one binder in order to form an electrode paste,
- applying the electrode paste at least partially on at least one surface of an electrical conductor, such as a conductor foil, and
- drying the conductor foil with the applied electrode paste, in particular at a temperature of ≥ 100 °C to ≤ 140 °C, for forming the anode.

The method thus describes a process in which firstly an electrode paste is formed which in turn is applied to an electrical conductor, such as a metal foil.

In order to form the anode, a silicon-carbon composite material having a silicon-comprising carbon scaffold being decorated with nanowires selected from silicon nanowires and carbon nanowires is mixed with a further carbon and thus pure carbon or a compound comprising atomic carbon. The further carbon is particularly an electrically conductive carbon and may be present in order to enhance the electrical conductivity of the formed anode. Graphite may be an example for the carbon. It is especially preferred that a homogeneous mixture is formed. This step may generally be realized by combining the respective components and by mixing them in a conventional mixing device. With regard to the silicon-carbon composite material and the nanowires, it is referred to the above description.

The so-formed mixture is then combined with at least one binder in order to form an electrode paste. The binder may generally be chosen as known in the art and may be like described above. The binder may be present as an aqueous solution, i.e. comprising water, and/or as a non-aqueous binder solution, i.e. comprising particularly an organic solvent. Alternatively, a solid binder may be used. This step thus serves to form an electrode paste. The electrode paste may be solid in case a solid binder is used or may be a pasty mass in case a binder solution is used.

The electrode paste is then at least partially applied onto at least one surface of an electrical conductor, such as a conductor foil. For an anode, in particular a copper foil may be used. This step may be realized by doctor blading e.g. in case a binder solution was used, or by means of calendaring e.g. in case a solid binder was used.

Especially in case a binder solution was used but not restricted thereto, the applied electrode paste may be dried in order to finalize the manufacturing procedure. Generally, drying may be realized at a temperature in the range of ≥ 100 °C to ≤ 140 °C.

With regard to further advantages and technical features of the before-described method, it is referred to the silicon-carbon composite material, the anode, the further methods, and to the electrochemical energy storage device as well as to the vehicle.

Further described is an electrochemical energy storage device, comprising
- at least one anode like described above;
- at least one cathode;
- a separator disposed between the cathode and the anode; and
- an electrolyte comprising lithium ions.

The general arrangement of the electrochemical energy storage device may be chosen as generally known in the art. Especially, the electrochemical energy storage device may be formed as a lithium-ion-battery. However, an important characteristic of such a device is that it comprises an anode as described in more detail above.

Further to the anode, the electrochemical energy storage device, or an electrochemical cell of the latter, comprises a cathode. The cathode may generally be formed as known in the art for lithium batteries.

Generally, the cathode may comprise a transition metal oxide. In more detail, the cathode may comprise a single crystal (SC) form, a polycrystalline form (PC) or a mixture of single crystal (SC) and polycrystalline (PC) form of layered transition metal oxide materials having the general formula Li₁₊ₓTM₁₋ₓO₂ with TM being Ni, Co, Mn, Al, Zr, Ti, Nb, W. The amount of these metals is preferably as follows: Ni = 0.7 to 0.95, Co = 0.01 to 0.15, Mn = 0.01 to 0.1, Al = 0 to 0.03, Zr = 0 to 0.01, Nb, Ti, W = 0 to 0.02, wherein x may be any value between 0 and 0.05. Further, in case a mixture of single crystal (SC) and polycrystalline (PC) form is present, the mixture ratio may be 20 to 35wt% SC and 65 to 80% PC.

In particular, the cathode comprises lithium nickel manganese cobalt oxide, wherein the lithium nickel manganese cobalt oxide is present in a mixture of a polycrystalline form and a single crystal form. According to this embodiment, the electrochemical properties of the electrochemical energy storage device may be improved even further, in particular with regard to cycling behavior and in particular with regard to charging time.

With regard to the separator, the latter may generally as well be formed as known in the prior art. Preferably, the separator may comprise a trilayer polymer. Such a polymer may for example comprise an inorganic coating, such as Al₂O₃, BaTiO₃.

It may further be preferred that the separator is laminated to the anode. This allows the advantage to improve stacking of electrodes, as the separator is already fixed on the anode electrode.

The electrolyte may comprise at least one compound selected from the group consisting of fluoroethylene carbonate, propylene carbonate, ethylene carbonate, lithium hexafluorophosphate, and lithium bis(fluorosulfonyl)imide. It could be shown that such electrolytes show superior properties when used in lithium batteries. In general, the electrolyte may comprise a mixture of LiPF₆ and LiFSi, wherein the electrolyte may be based on fluoroethylenecarbonate (FEC) based. It may exemplarily comprise 1 to 10wt.-% FEC, 0 to 20wt.-% ethylene carbonate (EC), 0 to 30wt.-% propylene carbonate (PC), each relating to the electrolyte, and optional additional additives.

An electrochemical energy storage device as described above comprising an anode as described shows the advantage of outstanding charging times which allow charging the electrochemical energy storage device from a very low state of charge to a very high state of charge in a very short time. This improves the acceptance in the market significantly.

Especially, thinking about secondary batteries as used in vehicles, the charging time is a significant factor which may improve acceptance of electrically driven vehicles.

Apart from the above and additionally to charging times, further characteristics of the anode are not deteriorated, such as long lifetime, high cycling stability and resistance against damages.

With regard to further advantages and technical features of the before-described electrochemical energy storage device, it is referred to the silicon-carbon composite material, the anode, the methods, and to the as well as to the vehicle.

Further described is an electrically driven vehicle, comprising an electric engine and an electrochemical energy storage device for supplying electrical energy to the electric engine, characterized in that the electrochemical energy storage device is formed like described before.

The vehicle may generally be any vehicle which is electrically driven. In particular, the electrically driven vehicle may be a fully electrically driven vehicle or a so-called hybrid vehicle. However, it may be preferred that the electrically driven vehicle is a fully electrically driven land vehicle, such as a car, a bus or a truck.

Such a vehicle comprises an electric engine and an electrochemical energy storage device for supplying electrical energy to the electric engine.

The electric engine may generally be arranged as known in the art, for example, the electrically driven engine may be a permanent synchronous machine as electric motor or an asynchronous machine as electric motor. Of course, both engines may be present and may be supplied with electrical energy from the electrochemical energy storage device. The latter is designed as defined above.

An anode as described and thus a respective electrochemical energy storage device shows the advantage of outstanding charging times which allow charging the electrochemical energy storage device from a very low state of charge to a very high state of charge in a very short time. This improves the acceptance in the market significantly.

Especially, thinking about secondary batteries as used in vehicles, the charging time is a significant factor which may improve acceptance of electrically driven vehicles. Therefore, especially improving charging times is an important characteristic of secondary batteries for vehicles. However, of course it should be noted that the anode as described here and consequently the electrochemical energy storage device is not limited to use in vehicles.

Apart from the above and additionally to charging times, further characteristics of the anode are not deteriorated, such as long lifetime, high cycling stability and resistance against damages.

With regard to further advantages and technical features of the before-described vehicle, it is referred to the silicon-carbon composite material, the anode, the methods, and to the electrochemical energy storage device.

In the following, the invention is explained by way of example with reference to the accompanying drawing and the accompanying examples by way of preferred embodiments, wherein the features shown below may each individually or in combination constitute an aspect of the invention:
Fig. 1 shows an exemplary electrochemical storage device with a manufactured anode comprising a silicon-carbon composite material; and
Fig. 2 shows an exemplary electrochemical storage device according to a further embodiment with an anode comprising a silicon-carbon composite material.

In the figures, identical reference numbers identify similar elements. The sizes and relative positions of elements in the figures are not necessarily drawn to scale and some of these elements are enlarged and positioned to improve figure legibility. Further, the particular shapes of the elements as drawn are not intended to convey any information regarding the actual shape of the particular elements, and have been solely selected for ease of recognition in the figures.

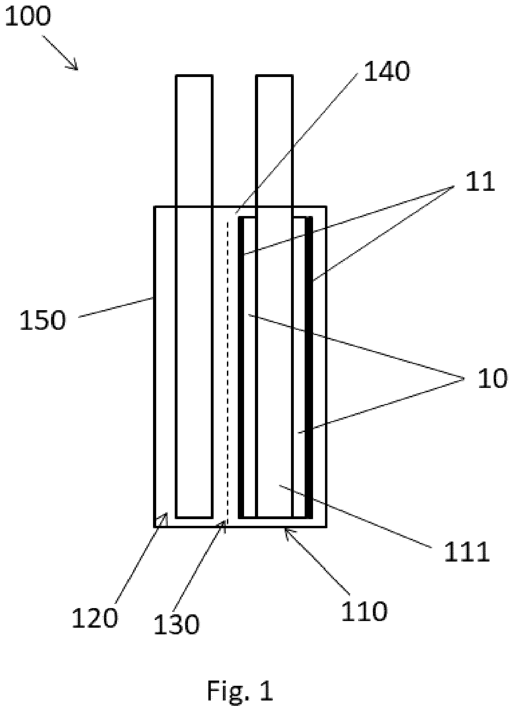

Fig. 1 shows a sectional view of an exemplary electrochemical storage device 100 with an anode 110, also called anode electrode, comprising a silicon-carbon composite material 10.

The electrochemical storage device 100 is formed as a lithium-ion-battery cell. The electrochemical storage device 100 comprises at least one anode 110, at least one cathode 120 and a separator 130 disposed between the cathode 120 and the anode 110. The cathode 120 preferably comprises a transition metal oxide.

Furthermore, an electrolyte 140 comprising lithium ions is provided in a cell housing 150 of the electrochemical storage device 100. The electrochemical storage device 100 can be formed as a lithium-ion-battery cell in a pouch form. Thus, the cell housing 150 may be formed as a aluminum bag. The anode 110, the cathode 120 and the separator 130 are arranged in the cell housing 150, too.

It is noted that Fig. 1 shows a simplified sectional view. The anode 110, the cathode 120 and the separator 130 are usually formed as multiple layers which are winded or folded in order to optimize packaging and in order to increase the possible surface area of the electrolyte 140. In the shown example, only one layer of the components is visible for illustrational purpose.

The anode 110 is coated on both sides with a silicon-carbon composite material 10. The surface coating 11 of the silicon-carbon composite material 10 is performed on surface areas of the silicon-carbon composite material 10 which are not in contact with a current collector 111 of the anode 110.

By utilizing an anode 110 with the silicon-carbon material 10 the electrical properties, especially with regard to charging times, is significantly enhanced.

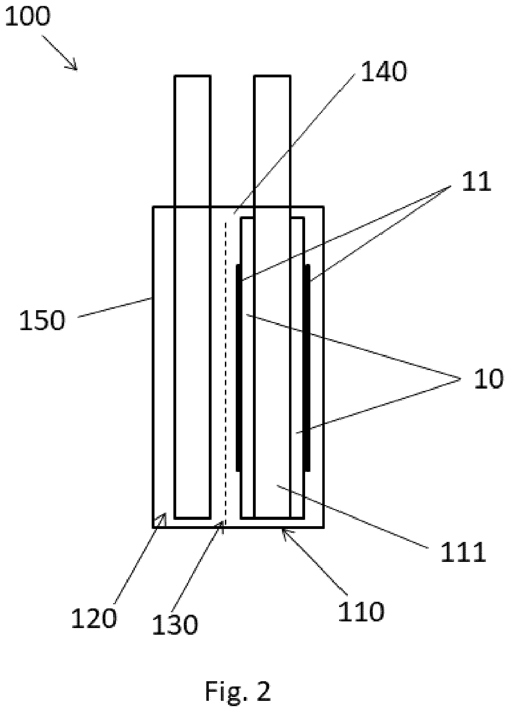

In Fig. 2 a further exemplary electrochemical storage device 100 is shown. The electrochemical storage device 100 comprises an anode 110 with a silicon-carbon composite material 10. In contrast to the embodiment shown in Fig. 1, the surface coating 11 of the silicon-carbon composite material 10 is applied partially on the surface are of the silicon-carbon composite material 10 such that parts of the surface area of the silicon-carbon composite material 10 remain without the surface coating 11.

## Claims

1. Silicon-carbon composite material (10), comprising:
- a porous carbon scaffold comprising micropores and mesopores and a total pore volume of more than 0.5 cm³/g;
- a silicon content in the range of ≥ 30 wt.-% to ≤ 75 wt.-%, relating to the silicon-carbon composite material (10);
- nanoparticles comprising at least one of the elements Cu, Fe or Ni, wherein the nanoparticles are positioned on the surface of the silicon-comprising carbon scaffold, and
- nanowires, selected from silicon nanowires and carbon nanowires; wherein the nanowires are grown on the nanoparticles, and wherein a first surface coating is provided which is at least partially applied on a first surface area of silicon-carbon composite material (10), the surface coating comprising at least one of the elements selected from C, Al, Si, Ti, Zr and Nb.

2. Silicon-carbon composite material (10) according to claim 1, wherein the first surface coating is formed as a layer, wherein the layer of the first surface coating has a thickness of > 0 nm to ≤ 0.3 nm and comprises an amorphous carbon or a metal oxide from at least one or more of the elements Al, Si, Ti, Zr and Nb or a combination of the aforementioned elements.

3. Silicon-carbon composite material (10) according to any of claims 1 or 2, wherein the first surface coating is covering at least 50% of the surface area of the silicon-carbon composite material (10).

4. Silicon-carbon composite material (10) according to any of claims 1 to 3, wherein the surface area of the silicon-carbon composite material (10) is at least partially covered by the first surface coating and further by a second surface coating, wherein the second surface coating is at least partially applied on top of the first surface coating, besides the first surface coating or on top of the first surface coating and besides the first surface coating.

5. Silicon-carbon composite material (10) according to claim 4, wherein the second surface coating is formed as a carbon coating.

6. Silicon-carbon composite material (10) according to any of claims 1 to 5, wherein the nanoparticles comprise a metal oxide of one or more elements from Cu, Fe and Ni.

7. Silicon-carbon composite material (10) according to any of claims 1 to 6, wherein silicon nanowires are provided, which comprise a monocrystalline silicon and a polycrystalline silicon, or a combination thereof.

8. Method of manufacturing a silicon-carbon composite material (10) according to any of the claims 1 to 7, wherein the method comprises the steps of:
- providing a porous carbon scaffold with micropores and mesopores;
- introducing a compound comprising silicon and further optionally at least one of the elements Fe, Al, Ni, W and Ti into the micropores and mesopores of the porous carbon scaffold in particular by chemical vapor infiltration to form a silicon-carbon composite material,
- attaching nanowires selected from carbon nanowires and silicon nanowires to the porous carbon scaffold in particular by means of chemical vapor deposition, wherein the nanowires are grown on nanoparticles being positioned on the surface of the carbon scaffold, wherein the nanoparticles comprise at least one element selected from Cu, Fe and/or Ni;
- applying at least a first surface coating on a surface area of the silicon-carbon composite material (10), the first surface coating comprising at least one of the elements selected from C, Al, Si, Ti, Zr and Nb, and wherein the first surface coating covers the surface area of the silicon-carbon composite material at least partially.

9. Method according to claim 8, wherein the at least one surface coating is applied via a gas phase deposition method.

10. Method according to any of claims 8 or 9, wherein the first surface coating comprises a metal oxide from at least one of the elements Al, Si, Zr and Nb.

11. Method according to any of claims 8 to 10, wherein the silicon-carbon composite material (10) is treated with a metal alkoxide or metal amide or alkyl metal compound to form a processed compound surface, wherein the processed compound surface is treated with moisture or oxygen or ozone in order to form the first surface coating.

12. Method according to claim 11, wherein the treatment of the silicon-carbon composite material (10) with a metal alkoxide or metal amide or alkyl metal compound to form a processed compound surface and the subsequent treatment of the processed compound surface with moisture or oxygen or ozone are repeated at least once.

13. Method according to any of claims 11 or 12, wherein during the treatment of the processed compound surface with moisture or oxygen or ozone, a temperature in a range from 150 °C to 550 °C is applied.

14. Anode (110) for an electrochemical energy storage device (100), comprising a silicon-carbon composite material (10) according to any of claims 1 to 7.

15. Method of manufacturing an anode (110) according to claim 14, wherein the method comprises the steps of:
- mixing a silicon-carbon composite material (10) according to any of claims 1 to 7 with at least one carbon,
- combining the mixture of the silicon-carbon composite material (10) with at least one carbon with at least one binder in order to form an electrode paste,
- applying the electrode paste at least partially onto at least one surface of an electrical conductor, such as a conductor foil, and
- drying the electrical conductor with the applied electrode paste, in particular at a temperature of ≥ 100 °C to ≤ 140 °C, for forming the anode (110).

16. Method according to claim 15, wherein the binder is used in an aqueous binder solution or in a non-aqueous binder solution and wherein a pasty electrode paste is formed.

17. Method according to claim 15, wherein a solid binder is used and wherein a solid electrode paste is formed.

18. Method according to claim 17, wherein the solid electrode paste is applied at least partially on at least one surface of an electrical conductor by means of a calendering method.

19. Electrochemical storage device (100), especially formed as a lithium-ion-battery, comprising:
- at least one anode (110) according to claim 14;
- at least one cathode (120);
- a separator (130) disposed between the cathode (120) and the anode (110); and
- an electrolyte (140) comprising lithium ions.

20. Electrically driven vehicle, comprising an electric engine and an electrochemical energy storage device (100) for supplying electrical energy to the electric engine, **characterized in that** the electrochemical energy storage device (100) is formed according to claim 19.
